# EUROPEAN PATENT SPECIFICATION

(11) **EP 3 393 183 B1**
(45) Date of publication and mention of the grant of the patent: **09.12.2026**
(21) Application number: 15910573.3
(22) Date of filing: 18.12.2015
(51) Int. Cl.: H04W 68/00, H04W 52/02

(54) **APPARATUSES FOR PAGING USER EQUIPMENT**
VORRICHTUNGEN FÜR FUNKRUF AN EIN BENUTZERGERÄT
APPAREILS POUR RECHERCHER UN ÉQUIPEMENT UTILISATEUR

(43) Date of publication of application: 24.10.2018
(73) Proprietor: 1FINITY Inc., Kawasaki-shi, Kanagawa 211-8588 (JP)
(72) Inventor: SHI, Yulong, Beijing 100025 (CN); XU, Haibo, Beijing 100025 (CN); XI, Wei, Beijing 100025 (CN)
(74) Representative: Haseltine Lake Kempner LLP
(86) International application number: PCT/CN2015/097866
(87) International publication number: WO 2017/101102

(56) References cited:
- WO-A1-2011/100497
- CN-A- 103 339 967
- CN-A- 104 025 679
- CN-A- 104 105 111
- US-A1- 2008 070 598
- US-A1- 2008 182 596
- US-A1- 2010 002 720
- US-A1- 2011 312 347
- 3GPP: "3rd Generation Partnership Project; Technical Specification Group GSM/EDGE Radio Access Network; Cellular system support for ultra low complexity and low throughput Internet of Things; (Release 13)", 22 September 2015 (2015-09-22), pages 1,2,46-49,220-223,349-358, XP002793417, Retrieved from the Internet <URL:https://portal.3gpp.org/desktopmodules/Specifications/SpecificationDetails.aspx?specificationId=2719> [retrieved on 20190807]
- NOKIA NETWORKS: "N-GSM: Design and Performance for N-PCH", vol. TSG GERAN, no. Kista, Sweden; 20150629 - 20150702, 30 June 2015 (2015-06-30), XP051625647, Retrieved from the Internet <URL:http://www.3gpp.org/ftp/tsg%5Fgeran/TSG%5FGERAN/AD%2DHOCs/Ad%2Dhoc%5FGERAN1%2DGERAN2%5FCIoT/Docs/GPC150509%2Ezip> [retrieved on 20150630]

## Description

### Technical Field

This disclosure relates to the field of communications technologies, and in particular to apparatuses for paging a user equipment.

### Background

Internet of Things (IoT) is more and more widely used in the next generation of mobile communications networks. A traffic of IoT has many new features, including extra low power consumption requirement, deployment of massive user equipment (UE), relatively less flow of data, and low requirement on traffic latency, etc. Such features pose many technical requirements to an LTE (long term evolution) system, in which an important requirement includes that behaviors of UE should be power saving as possible.

A new wireless communications technology for supporting IoT traffics, i.e. a subject of a technology of narrow band Internet of Things (NB-IoT), is under study in the 3rd generation partnership project (3GPP). The NB-IoT technology is a new narrow band communications technology based on the existing LTE technology and enhanced to satisfy IoT traffic demands.

A scheme for paging a UE, especially a scheme for paging a UE in an idle state, existing in an NB-IoT and an LTE system, requires power saving as much as possible. In an existing paging scheme, within each paging cycle and at a subframe in a specified system frame number (SFN), the UE monitors a paging message transmitted by the network. The system frame where the UE monitors the paging is referred to as a paging frame (PF), and the subframe in the PF monitoring the paging is referred to as a paging occasion (PO).

For example, a formula used by each UE for calculating its PF and PO is as follows: SFN mod T= (T div N)*(UE_ID mod N), i_s = floor(UE_ID/N) mod Ns; where, SFN and i_s respectively determine positions of the PF and the PO, and parameters N, T, Ns, and *nB,* etc., are configured by the network, such as N: min(T, *nB),* Ns: max(1, *nB*/*T),* UE_ID = IMSI mod 1024. An international mobile subscriber identity (IMSI) is a numeral value fixed in the UE, and *nB* is a parameter broadcasted by the network in system information, and denotes a total number of POs of a cell within a paging cycle.

When a UE has arrived data, a mobility management entity (MME) transmits a paging message to a base station (such as an eNB), and the base station transmits a paging message within a PO of the UE. The paging message is carried by, for example, a physical downlink shared channel (PDSCH) indicated by downlink control information (DCI) in a physical downlink control channel (PDCCH). After the UE decodes the paging message on the PDSCH, if a UE identity in the paging message is identical to that of itself, it shows that the UE is paged, and a connection establishment request should be initiated.

It should be noted that the above description of the background is merely provided for clear and complete explanation of this disclosure and for easy understanding by those skilled in the art. And it should not be understood that the above technical solution is known to those skilled in the art as it is described in the background of this disclosure.

WO2011100497A1 discloses methods and apparatus for performing group-based machine-to-machine (M2M) communication. Machine-type communication (MTC) wireless transmit/receive units (WTRUs) may operate in M2M groups. A group of MTC WTRUs may be paged collectively as a group. An MTC WTRU may store an individual international mobile subscriber identity (IMSI) associated with the MTC WTRU, and a group-based IMSI associated with the MTC group that the MTC WTRU belongs to. The MTC WTRU may use one or both IMSIs to receive paging messages. When the MTC WTRU receives a paging message, the MTC WTRU may compare a recipient IMSI contained in the paging message to the individual IMSI and the group-based IMSI. If the recipient IMSI matches the individual IMSI and the group-based IMSI, the MTC WTRU may proceed to process the paging message.

Non-patent literature "3GPP, "3rd Generation Partnership Project; Technical Specification Group GSM/EDGE Radio Access Network; Cellular system support for ultra low complexity and low throughput Internet of Things; (Release 13)", (20150922), page 1, 2, 46-49, 220-223, 349-358, URL: https://portal.3 gpp.org/desktopmodules/Specifications/SpecificationDetails.aspx?spec ificationId=2719, (20190807)" discloses that PF is given by the following equation: super frame number mod T = (T div N)*(MS_ID mod N), and PO is derived from the following calculation: i_s = floor (MS_ID/N) mod Ns.

### Summary

The present invention is defined by the appended independent claims, to which reference should now be made. Specific embodiments are defined in the dependent claims.

It was found by the inventors that according to existing PF and PO allocation rules, it is possible that multiple UEs have identical PFs and POs. when a UE corresponding to a PO is paged, other UEs within the PO will also decode PDCCHs and PDSCHs. However, the other UEs are unable to find UE identities of themselves in paging messages of the PDSCHs, which shows that these UEs are not paged, and actually, these UEs waste power in decoding the PDSCHs.

Such a phenomenon of power consumption may be referred to as "false paging". The higher the number of UEs in a cell is, the severer phenomena of "false paging" is, and the more power consumption of the UEs is. Hence, the problem of "false paging" is urgently to be solved for an IoT network having massive UEs.

Embodiments of this disclosure provide an apparatus and method for paging a UE and a communications system, in which paged UEs are grouped so that different groups have identical or approximate numbers of UEs as possible, thereby reducing a probability of "false paging" of the overall cell.

An advantage of the embodiments of this disclosure exists in that a first-grade paging group is divided based on an inherent identity of the UE, or based on an inherent identity of the UE and a network configuration parameter, and a second-grade paging group is divided based on a network identity allocated by a mobility management entity for the UE. Hence, different paging groups may have identical or approximate numbers of UEs, which may reduce a probability of "false paging" of the overall cell.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

### Brief Description of the Drawings

Many aspects of the disclosure can be better understood with reference to the following drawings. The components in the drawings are not necessarily to scale, emphasis instead being placed upon clearly illustrating the principles of this disclosure. To facilitate illustrating and describing some parts of the disclosure, corresponding portions of the drawings may be exaggerated or reduced.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.
FIG. 1 is a schematic diagram of the method for paging a UE of Embodiment 1 of this disclosure;
FIG. 2 is another schematic diagram of the method for paging a UE of Embodiment 1 of this disclosure;
FIG. 3 is a schematic diagram of the method for paging a UE of Embodiment 2 of this disclosure;
FIG. 4 is another schematic diagram of the method for paging a UE of Embodiment 2 of this disclosure;
FIG. 5 is a further schematic diagram of the method for paging a UE of Embodiment 2 of this disclosure;
FIG. 6 is a schematic diagram of the method for paging a UE of Embodiment 3 of this disclosure;
FIG. 7 is a schematic diagram of the method for allocating S-TMSIs of Embodiment 3 of this disclosure;
FIG. 8 is a schematic diagram of the apparatus for paging a UE of Embodiment 4 of this disclosure;
FIG. 9 is a schematic diagram of the UE of Embodiment 4 of this disclosure;
FIG. 10 is a schematic diagram of the apparatus for paging a UE of Embodiment 5 of this disclosure;
FIG. 11 is another schematic diagram of the apparatus for paging a UE of Embodiment 5 of this disclosure;
FIG. 12 is a further schematic diagram of the apparatus for paging a UE of Embodiment 5 of this disclosure;
FIG. 13 is a schematic diagram of the base station of Embodiment 5 of this disclosure;
FIG. 14 is a schematic diagram of the apparatus for paging a UE of Embodiment 6 of this disclosure;
FIG. 15 is another schematic diagram of the apparatus for paging a UE of Embodiment 6 of this disclosure;
FIG. 16 is a further schematic diagram of the apparatus for paging a UE of Embodiment 6 of this disclosure;
FIG. 17 is a schematic diagram of the identity allocating unit of Embodiment 6 of this disclosure;
FIG. 18 is a schematic diagram of the MME of Embodiment 6 of this disclosure; and
FIG. 19 is a schematic diagram of the communications system of Embodiment 7 of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

For the "false paging", a method for expanding a paging cycle of UE may be taken into account for use, so as to save power of the UE as possible. However, not all latency requirements of IoT traffics permit the use of an expanded paging cycle. For such traffics, a method for grouping UEs may be adopted, in which a paging group to which the UE paged at each time belongs is indicated in DCI of a PDCCH at this time. For UEs within a PO, only the UE in an indicated paging group decodes the PDSCH, and this will greatly lower a probability of "false paging".

There are many methods for grouping UEs in a cell, and a method that is generally used is determining a number of a paging group to which it belongs according to an IMSI of the UE; the number of paging groups in the network may be determined by the network. However, in such a general method of paging group, as IMSI are arbitrarily allocated and fixed in the UE, the number of UEs really exist in each paging group in a PO may be uneven.

In a special case, the numbers of UEs in a PO are extremely unevenly distributed in paging groups, which causes the number of UEs in a group of the PO to be much more than the numbers of UEs in other groups. The paging group having a relatively large number of UEs still has a very high probability of "false paging" in the PO. When the numbers of UEs in different paging groups in the same PO are identical, the PO has a relatively small probability of "false paging"; while the above general method of paging group is unable to ensure this point, and as a result, it is possible that a PO still has a relatively high probability of "false paging", and power consumption of part of UEs is outstandingly increased.

Therefore, in this disclosure, a first-grade paging group is divided based on an inherent identity of the UE, or based on an inherent identity of the UE and a network configuration parameter, and a second-grade paging group is divided based on a network identity allocated by a mobility management entity for the UE. Hence, different paging groups may have identical or approximate numbers of UEs, which may reduce a probability of "false paging" of the overall cell.

The embodiment of this disclosure shall be described below in detail by taking NB-IoT and LTE as examples. However, this disclosure is not limited thereto, and it is also applicable to other communications systems. Communications systems having relatively a large number of UEs and needing for paging a UE are all applicable to this disclosure.

### Embodiment 1, which is not encompassed by the wording of the claims

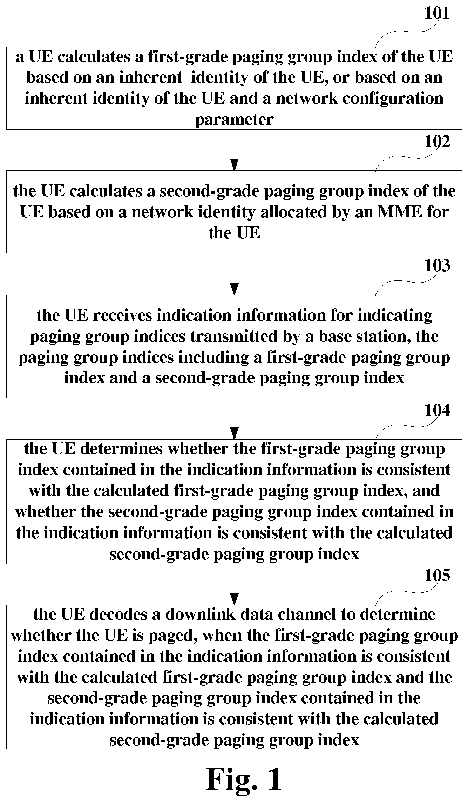

The embodiment of this disclosure provides a method for paging a UE. FIG. 1 is a schematic diagram of the method for paging a UE of the embodiment of this disclosure, which shall be described from a UE side. As shown in FIG. 1, the method includes:
Block 101: a UE calculates a first-grade paging group index of the UE based on an inherent identity of the UE, or based on an inherent identity of the UE and a network configuration parameter.

Block 102: the UE calculates a second-grade paging group index of the UE based on a network identity allocated by a mobility management entity for the UE.

Block 103: the UE receives indication information for indicating paging group indices transmitted by a base station, the paging group indices including a first-grade paging group index and a second-grade paging group index.

Block 104: the UE determines whether the first-grade paging group index contained in the indication information is consistent with the calculated first-grade paging group index, and whether the second-grade paging group index contained in the indication information is consistent with the calculated second-grade paging group index.

Block 105: the UE decodes a downlink data channel transmitted by the base station to determine whether the UE is paged, when the first-grade paging group index contained in the indication information is consistent with the calculated first-grade paging group index and the second-grade paging group index contained in the indication information is consistent with the calculated second-grade paging group index.

In this embodiment, the UE may be, for example, a terminal of an NB-IoT. However, this disclosure is not limited thereto; for example, the UE may also be a terminal of another network system. The embodiments of this disclosure shall be described by taking an NB-IoT as an example only. However, this disclosure is not limited thereto, and it is also applicable to any system where UE paging is performed.

Furthermore, a base station in the embodiments of this disclosure may be a macro base station (such as an eNB), and the UE may be served by a macro cell generated by the macro base station. And a base station in the embodiments of this disclosure may also be a pico base station, and the UE may be served by a pico cell generated by the pico base station. However, this disclosure is not limited thereto, and a particular scenario may be determined according to an actual situation.

In this embodiment, the inherent identity of the UE may be an IMSI, the network identity of the UE may be an SAE (system architecture evolved)-temporary mobile subscriber identity (S-TMSI), and the network configuration parameter may be a number *nB* of paging occasions of a cell in a paging cycle.

Following description shall be given by taking IMSI, S-TMSI and *nB* as examples only. However, this disclosure is not limited thereto, and other identities or parameters may also be used; for example, S-TMSI may be replaced with a global unique temporary user equipment identity (GUTI). And furthermore, such identities or parameters may be obtained by the UE via system information (SI), and reference may be made to the relevant art for how to obtain IMSI, S-TMSI, and *nB,* etc.

In this embodiment, the first-grade paging group index may be calculated by using the following formula: $UE _ ID = IMSI mod 1024 ;$
Paging _GroupID = UE_ID div *nB,* or Paging_GroupID = floor(UE_ID/*nB*);
where, Paging _GroupID is the first-grade paging group index, IMSI is the international mobile subscriber identity, *nB* is the network configuration parameter, mod denotes a modulo operation, div denotes a division operation, and floor denotes a rounded down operation.

Furthermore, the second-grade paging group index may be calculated by using the following formula: $S - TMSI _ GroupID = S - TMSI mod {2}^{∧ M} ;$ where, S-TMSI_GroupID is the second-grade paging group index, S-TMSI is the temporary mobile subscriber identity, M is a predefined number of bits used in S-TMSI grouping, and mod denotes a modulo operation.

In this embodiment, in considering formulae for calculating a PF and a PO in the relevant art, the inventors found the following rules:
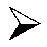 within a whole paging cycle, there exist total *nB* POs, there existing 1024/nB different UE_IDs in each PO; and
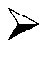 possible UE_ID values in each PO may be differed from each other by *nB,* that is, UE_IDs that possibly appear in a PO include {*i, i+nB, i+*2**nB, i+3*nB, i+4*nB, ....}, i =* 0, 1, 2,... *nB*-1*.*

And at the same time, it was noted that although the IMSI of the UE is not allocated by the network, the S-TMSI of the UE is allocated by the MME of the network in an attachment procedure. Hence, it may be deemed that all UEs have specific S-TMSIs in the MME allocated by the network. And in allocating the S-TMSIs of the UEs by the MME, some features may be added, so as to ensure that the numbers of the UEs allocated in the same paging group are identical or approximate.

In this embodiment, the indication information may be contained in DCI of a PDCCH, and the UE may obtain the indication information by monitoring the DCI of the PDCCH; or the indication information may be contained in system information, and the UE may obtain the indication information by receiving the system information transmitted by the base station. Following description shall be given by taking a PDCCH and a PDSCH as examples. However, this disclosure is not limited thereto; for example, the PDCCH may be replaced by an ePDCCH, or an M-PDCCH, etc.

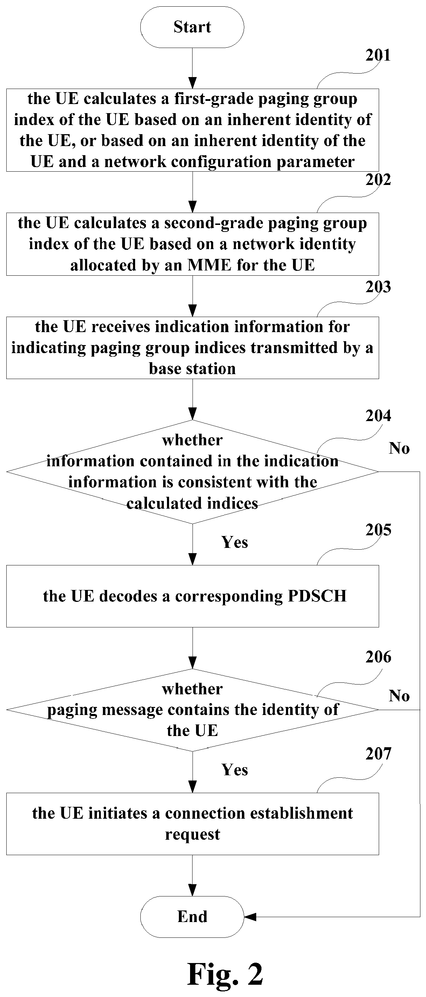

FIG. 2 is another schematic diagram of the method for paging a UE of the embodiment of this disclosure. As shown in FIG. 2, the method includes:
Block 201: the UE calculates a first-grade paging group index of the UE based on an inherent identity of the UE, or based on an inherent identity of the UE and a network configuration parameter;
in this implementation, the first-grade paging group index may be calculated based on an IMSI only; for example, UE_ID = IMSI mod 1024 is taken as the first-grade paging group index; and the first-grade paging group index may also be calculated based on an IMSI and *nB;* for example, Paging_GroupID = UE_ID div *nB* = (IMSI mod 1024) div *nB* is taken as the first-grade paging group index, a range of value of Paging_GroupID being {0, 1, 2, 3, ..., 1024/*nB*-1}.
Block 202: the UE calculates a second-grade paging group index of the UE based on a network identity allocated by an MME for the UE;
in this implementation, S-TMSI_GroupID = S-TMSI mod 2^^{M} may be taken as the second-grade paging group index; reference may be made to Embodiment 3 below for allocation of the S-TMSI.
Block 203: the UE receives indication information for indicating paging group indices transmitted by a base station, the paging group indices including a first-grade paging group index and a second-grade paging group index;
in this implementation, following two fields may be added into the DCI of the PDCCH indicating the paging message to respectively indicate the index of the first-grade paging group to which the paged UE belongs and the index of the second-grade paging group to which the paged UE belongs, a paging group index of the UE being jointly determined by the two grades of paging group indices:
   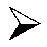 a Paging _GroupID field, which denotes the index of the first-grade paging group to which the paged UE belongs, calculation of the group index being related to, for example, the IMSI of the UE and the parameter *nB* configured by the network; the number of bits of the field may be fixed, or may be variable, but at least log₂(1024/*nB*) bits should be included; and
   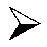 an S-TMSI_GroupID field, which denotes the index of the second-grade paging group to which the paged UE belongs, calculation of the group index being related to, for example, the S-TMSI (or GUTI) of the UE; the number of bits of the field is M.

Furthermore, the base station may transmit cycle information to the UE, the cycle information being used to indicate that the UE needs not to monitor paging at the PO of its own within multiple paging cycles after a paging message is received; for example, following field may further be included in the DCI of the PDCCH:
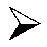 a PO_Skip_Number field, which denotes that traffic arrival will not occur within consecutive PO_Skip_Number paging cycles after the paged UE receives the paging message, and the UE needs not to monitor the PDCCH at the PO.

In this embodiment, the first-grade paging group index and the second-grade paging group index contained in the indication information may be obtained by the base station through calculation, or may be obtained by the MME through calculation, and details may be as described in the following embodiments 2 and 3.

Block 204: the UE determines whether the information contained in the indication information is consistent with the calculated indices, that is, whether the first-grade paging group index contained in the indication information is consistent with the first-grade paging group index calculated in block 201, and whether the second-grade paging group index contained in the indication information is consistent with the second-grade paging group index calculated in block 202. the UE executes block 205 when they are respectively consistent, and the UE does not decode corresponding PDSCHs when they are not respectively consistent.

In this implementation, the UE may monitor the field Paging _GroupID and the field S-TMSI_GroupID in the DCI of the PDCCH, and if two grades of paging group indices indicated by the two fields are both identical to the indices calculated by the UE (i.e. the indices calculated in block 201 and block 202), it shows that a paging message of the UE may exist in the PDSCH, and the UE should decode the PDSCH to further check whether there exists the UE identity of itself in the paging message; otherwise, if at least one grade of paging group index in the fields Paging_GroupID and S-TMSI_GroupID is different from the index calculated by the UE itself, the UE does not decode the PDSCH.

Block 205: the UE decodes a corresponding PDSCH.

Block 206: the UE determines whether the decoded paging message contains the identity of the UE; the UE executes 207 if it is determined yes, and it is determined that the UE is not paged if it is determined no; and
Block 207: the UE initiates a connection establishment request.

If the UE successfully receives the paging message and the field PO_Skip_ Number is read from the DCI indication, the UE may not monitor the PDCCH of the PO of itself in the next PO_Skip_Number paging cycles.

It should be noted that FIGs. 1 and 2 only schematically describe the embodiment of this disclosure; however, this disclosure is not limited thereto. For example, an order of execution of the blocks or steps may be appropriately adjusted, and furthermore, some other blocks or steps may be added, or some of these blocks or steps may be reduced.

It can be seen from the above embodiment that a first-grade paging group is divided based on an inherent identity of the UE, or based on an inherent identity of the UE and a network configuration parameter, and a second-grade paging group is divided based on a network identity allocated by a mobility management entity for the UE. Hence, different paging groups may have identical or approximate numbers of UEs, which may reduce a probability of "false paging" of the overall cell. And furthermore, as the group number parameters of the paging allocation are determined by the parameter *nB* known to the UE, air-interface signaling needed by separately configuring the parameters may be reduced.

### Embodiment 2, which is not encompassed by the wording of the claims

The embodiment of this disclosure provides a method for paging a UE, which is further description on the basis of Embodiment 1, with contents identical to those in Embodiment 1 being not going to be described herein any further.

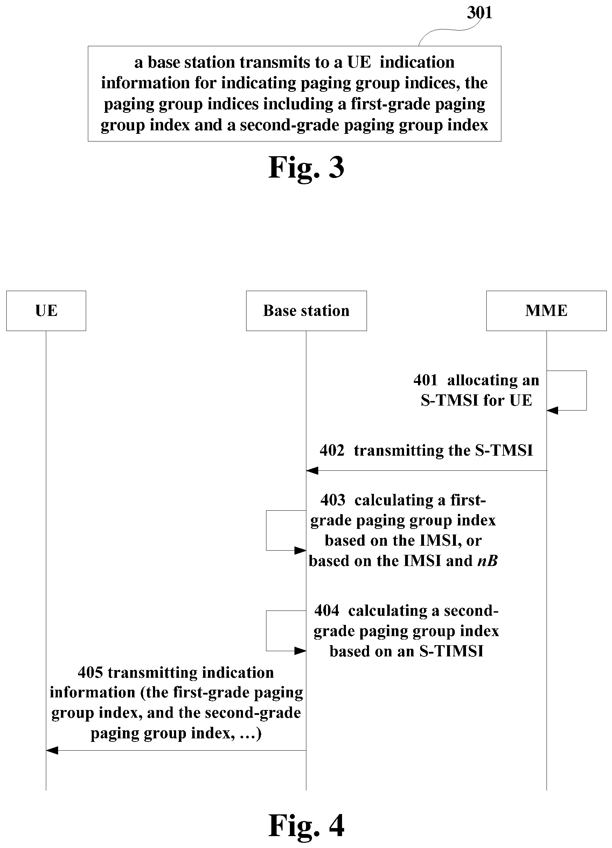

FIG. 3 is a schematic diagram of the method for paging a UE of the embodiment of this disclosure, which shall be described from a base station side. As shown in FIG. 3, the method includes:
Block 301: a base station transmits to a UE indication information for indicating paging group indices, the paging group indices including a first-grade paging group index and a second-grade paging group index;
the first-grade paging group index is obtained based on inherent identity of a UE, or based on the inherent identity of the UE and a network configuration parameter, and the second-grade paging group index is obtained based on network identity allocated by a mobility management entity for the UE.

In this embodiment, the inherent identity of the UE may be an IMSI, the network identity of the UE may be an S-TMSI, and the network configuration parameter may be a number *nB* denoting the number of POs of a cell in a paging cycle; however, this disclosure is not limited thereto. And furthermore, the indication information may be transmitted via DCI of a PDCCH, or may be transmitted via system information.

In this embodiment, the base station may further transmit cycle information to the UE, the cycle information being used to indicate that the UE needs not to monitor within multiple paging cycles after a paging message is received. The cycle information may be contained in the indication information; for example, a field PO_Skip_Number may be added into the DCI of the PDCCH.

In an implementation, the first-grade paging group index and the second-grade paging group index may be obtained by the base station through calculation, and the first-grade paging group index and the second-grade paging group index may be contained in, for example, the DCI of the PDCCH.

FIG. 4 is another schematic diagram of the method for paging a UE of the embodiment of this disclosure, which is further description from a UE side, a base station side and an MME side. As shown in FIG. 4, the method includes:
401: an MME allocates an S-TMSI for a UE;
reference may be made to Embodiment 3 for how to allocate the S-TMSI by the MME.
402: the MME transmits the S-TMSI to a base station;
for example, the S-TMSI may be transmitted to the base station in a network attachment procedure; however, this disclosure is not limited thereto, and any related method may be used.
403: the base station calculates a first-grade paging group index of the UE based on the IMSI of the UE, or based on the IMSI and the *nB;*
in this implementation, the first-grade paging group index may be calculated based on the IMSI only, or the first-grade paging group index may be calculated based on the IMSI and the *nB;* for example, Paging_GroupID = UE_ID div *nB* = (IMSI mod 1024) div *nB* is taken as the first-grade paging group index, a range of value of Paging _GroupID being {0,1,2,3,...,1024/nB-1}.
404: the base station calculates a second-grade paging group index of the UE based on an S-TIMSI;
in this implementation, S-TMSI_GroupID = S-TMSI mod 2^^{M} may be taken as the second-grade paging group index.
405: the base station transmits to the UE indication information for indicating paging group indices, the paging group indices including the first-grade paging group index and the second-grade paging group index.

In another implementation, the first-grade paging group index and the second-grade paging group index may be calculated and then transmitted to the base station by the MME, and the base station contains the first-grade paging group index and the second-grade paging group index in, for example, the DCI of the PDCCH.

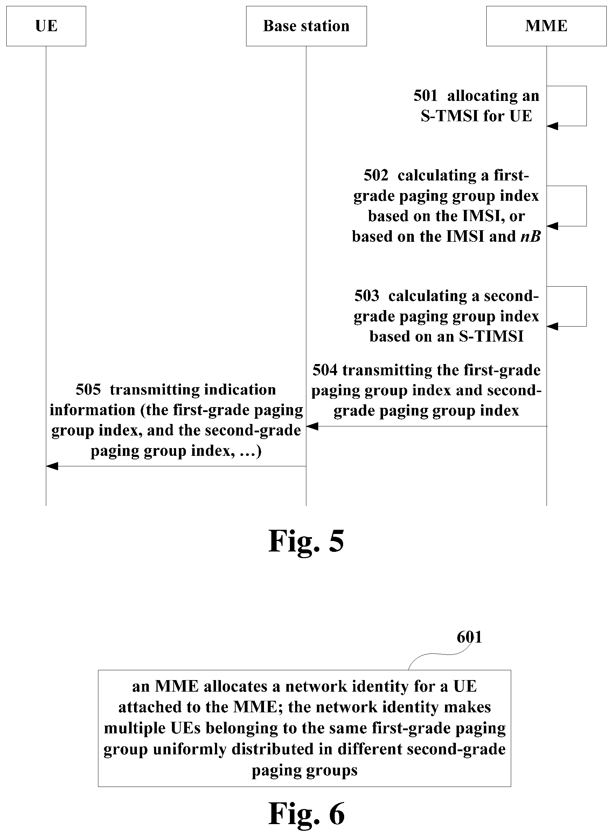

FIG. 5 is a further schematic diagram of the method for paging a UE of the embodiment of this disclosure, which is further description from the UE side, the base station side and the MME side. As shown in FIG. 5, the method includes:
501: the MME allocates an S-TMSI for a UE;
reference may be made to Embodiment 3 for how to allocate the S-TMSI by the MME.
502: the MME calculates a first-grade paging group index of the UE based on the IMSI of the UE, or based on the IMSI and the *nB;*
in this implementation, the first-grade paging group index may be calculated based on the IMSI only, or the first-grade paging group index may be calculated based on the IMSI and the *nB;* for example, Paging_GroupID = UE_ID div *nB* = (IMSI mod 1024) div *nB* is taken as the first-grade paging group index, a range of value of Paging _GroupID being {0,1,2,3,...,1024/nB-1}.
503: the MME calculates a second-grade paging group index of the UE based on an S-TIMSI;
in this implementation, S-TMSI_GroupID = S-TMSI mod 2^^{M} may be taken as the second-grade paging group index.
504: the MME transmits the first-grade paging group index and the second-grade paging group index to the base station.
505: the base station transmits to the UE indication information for indicating paging group indices, the paging group indices including the first-grade paging group index and the second-grade paging group index.

It should be noted that FIGs. 4 and 5 only schematically describe the embodiment of this disclosure; however, this disclosure is not limited thereto. For example, an order of execution of blocks or steps may be appropriately adjusted, and furthermore, some other blocks or steps may be added, or some of these blocks or steps may be reduced.

It can be seen from the above embodiment that a first-grade paging group is divided based on an inherent identity of the UE, or based on an inherent identity of the UE and a network configuration parameter, and a second-grade paging group is divided based on a network identity allocated by a mobility management entity for the UE. Hence, different paging groups may have identical or approximate numbers of UEs, which may reduce a probability of "false paging" of the overall cell. And furthermore, as the group number parameters of the paging allocation are determined by the parameter *nB* known to the UE, air-interface signaling needed by separately configuring the parameters may be reduced.

### Embodiment 3, which is not encompassed by the wording of the claims

The embodiment of this disclosure provides a method for paging a UE, which is further description on the basis of embodiments 1 and 2, with contents identical to those in embodiments 1 and 2 being not going to be described herein any further.

FIG. 6 is a schematic diagram of the method for paging a UE of the embodiment of this disclosure, which shall be described from an MME side. As shown in FIG. 6, the method includes:
Block 601: the MME allocates a network identity for a UE attached to the MME;
the network identity makes multiple UEs belonging to the same first-grade paging group uniformly distributed in different second-grade paging groups, the first-grade paging group being formed based on inherent identities of the UEs, or based on the inherent identities of the UEs and network configuration parameters.

In this embodiment, the inherent identity of the UE may be an IMSI, the network identity of the UE may be an S-TMSI, and the network configuration parameter may be a number *nB* denoting the number of paging occasions of a cell in a paging cycle; however, this disclosure is not limited thereto.

In this embodiment, in order to ensure that the numbers of the UEs in different paging groups are identical or approximate, in allocating the S-TMSI by the MME for the UE, it should be ensured that UEs attached to the MME and belonging to the same first-grade paging group are evenly distributed in different second-grade paging groups.

In this embodiment, in allocating the S-TMSI, the MME may control lowest M bits of the S-TMSI. And the MME stores 2^*^{L}* variables S-TMSI_GroupID[*i*]; where, *i*=0,1,2,3,...2^*^{L}*-1, L is a preset value, initial values of these variable being all 0.

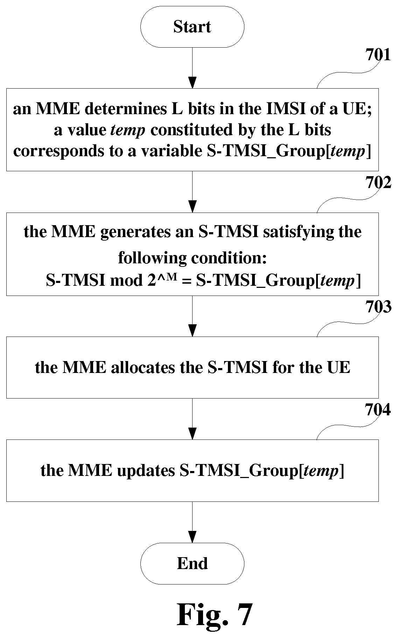

FIG. 7 is a schematic diagram of the method for allocating S-TMSIs of the embodiment of this disclosure. As shown in FIG. 7, in each time of allocating an S-TMSI for a UE, the MME executes the following steps:
Block 701: the MME determines L bits in the IMSI of the UE; a numeral value constituted by the L bits is *temp,* the *temp* corresponding to a variable S-TMSI_Group[*temp*].

Block 702: the MME generates an S-TMSI satisfying the following condition:
S-TMSI mod 2^^{M} = *S-TMSI_Group[temp];* where, M is a predefined number of bits used in S-TMSI grouping, and mod denotes a modulo operation; the MME may continuously and randomly generate S-TMSIs in turn, until the S-TMSI satisfying the above condition is obtained.
Block 703: the MME allocates the S-TMSI for the UE; and
Block 704: the MME updates S-TMSI_Group[*temp*].

For example, S-TMSI_Group[temp] = S-TMSI_Group[temp] + 1. And if a value of S-TMSI_Group[temp] after being updated is equal to 2^^{M}, S-TMSI_Group[temp] may be reset to be 0.

In this embodiment, when specific *L* bits in the IMSI are selected, the *L* bits may be selected continuously, or may be selected uncontinuously, from all bits in the IMSI, and positions of the *L* bits may be provided in a protocol.

In one implementation, when the first-grade paging group is formed based on inherent identities of the multiple UEs and the network configuration parameters, the lowest 10 bits in the IMSI may be selected. $UE _ ID = IMSI mod {2}^{∧ L} ;$ $Paging _ GroupID = UE _ ID div nB , or , Paging _ GroupID = floor \left(UE_ID/nB\right) ;$ where, Paging _GroupID is the first-grade paging group index, IMSI is the international mobile subscriber identity, *nB* is the network configuration parameter, mod denotes a modulo operation, div denotes a division operation, and floor denotes a rounded down operation.

In another implementation, when the first-grade paging group is formed based on the inherent identities of the multiple UEs, the lowest 10 bits and bits from a (log₂*P* + 1)-th bit to a (log₂(*G***P*))-th bit in an ascending order in the IMSI may be selected; $Paging _ GroupID = \left(IMSI mod G*P\right) / P ;$ and G and P are predefined values, *P* ≥ 1024, Paging_GroupID is the first-grade paging group index, IMSI is the international mobile subscriber identity, and mod denotes a modulo operation.

For example, if G = 4 and P = 2048, Paging _GroupID = (IMSI mod 4*2048) / 2048, and the lowest 10 bits and bits from a 12th bit to a 13th bit in an ascending order in the IMSI should be selected, that is, total 12 bits (L=12) are selected from the IMSI.

Hence, in allocating the S-TMSIs by the MME, some features may be added, so as to ensure that the numbers of the UEs allocated in the same paging group are identical or approximate.

In one implementation, the MME may transmit the S-TMSI to the base station, and the first-grade paging group index and the second-grade paging group index may be calculated by the base station, and may be contained by the base station in, for example, the DCI of the PDCCH.

In another implementation, the first-grade paging group index and the second-grade paging group index may be calculated by the MME and then transmitted to the base station, and the base station may contain the first-grade paging group index and the second-grade paging group index in, for example, the DCI of the PDCCH. And reference may be made to embodiments 1 and 2 for how to calculate the first-grade paging group index and the second-grade paging group index.

It can be seen from the above embodiment that the MME may control the lowest M bits of the network identity in allocating network identity, and a first-grade paging group is divided based on an inherent identity of the UE, or based on an inherent identity of the UE and a network configuration parameter, and a second-grade paging group is divided based on a network identity allocated by a mobility management entity for the UE. Hence, different paging groups may have identical or approximate numbers of UEs, which may reduce a probability of "false paging" of the overall cell. And furthermore, as the group number parameters of the paging allocation are determined by the parameter *nB* known to the UE, air-interface signaling needed by separately configuring the parameters may be reduced.

### Embodiment 4

The embodiment of this disclosure provides an apparatus for paging a UE, configured in the UE. This embodiment corresponds to Embodiment 1, with contents identical those in Embodiment 1 being not going to be described herein any further.

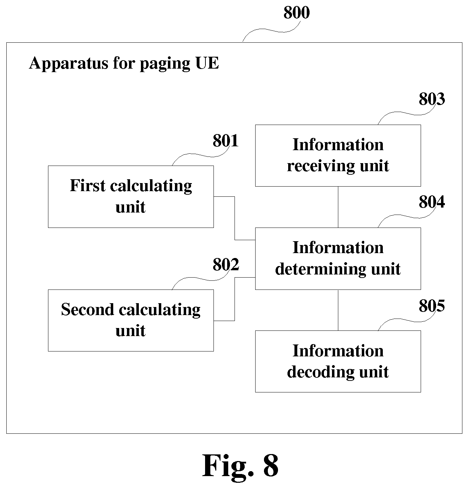

FIG. 8 is a schematic diagram of the apparatus for paging a UE of the embodiment of this disclosure. As shown in FIG. 8, the apparatus 800 for paging a UE includes:
a first calculating unit 801 configured to calculate a first-grade paging group index of the UE based on an inherent identity of the UE, which is not encompassed by the wording of the claims, or based on an inherent identity of the UE and a network configuration parameter;
a second calculating unit 802 configured to calculate a second-grade paging group index of the UE based on a network identity allocated by a mobility management entity for the UE;
an information receiving unit 803 configured to receive indication information for indicating paging group indices transmitted by a base station, the paging group indices including a first-grade paging group index and a second-grade paging group index;
an information determining unit 804 configured to determine whether the first-grade paging group index contained in the indication information is consistent with the first-grade paging group index calculated by the first calculating unit 801, and whether the second-grade paging group index contained in the indication information is consistent with the second-grade paging group index calculated by the second calculating unit 802; and
an information decoding unit 805 configured to decode a downlink data channel transmitted by the base station to determine whether the UE is paged, when the first-grade paging group index contained in the indication information is consistent with the first-grade paging group index calculated by the first calculating unit 801 and the second-grade paging group index contained in the indication information is consistent with the second-grade paging group index calculated by the second calculating unit 802.

In this embodiment, the inherent identity of the UE is an IMSI, the network identity is an S-TMSI, and the network configuration parameter is a number *nB* denoting paging occasions of a cell in a paging cycle.

In this embodiment, the first calculating unit 801 calculates the first-grade paging group index by using the following formula: $UE _ ID = IMSI mod 1024 ;$ $Paging _ GroupID = UE _ ID div nB , or Paging _ GroupID = floor \left(UE_ID/nB\right) ;$ where, Paging _GroupID is the first-grade paging group index, IMSI is the international mobile subscriber identity, *nB* is the network configuration parameter, mod denotes a modulo operation, div denotes a division operation, and floor denotes a rounded down operation.

In this embodiment, the second calculating unit 802 calculates the second-grade paging group index by using the following formula: $S - TMSI _ GroupID = S - TMSI mod {2}^{∧ M} ;$ where, S-TMSI_GroupID is the second-grade paging group index, S-TMSI is the temporary mobile subscriber identity, M is a predefined number of bits used in S-TMSI grouping, and mod denotes a modulo operation.

In this embodiment, the information receiving unit 803 may obtain the indication information by monitoring downlink control information of a physical downlink control channel, or may obtain the indication information by receiving system information transmitted by the base station. And the downlink data channel may be a physical downlink shared channel.

In this embodiment, the information receiving unit 803 may further be configured to receive cycle information transmitted by the base station, the cycle information indicating that no monitoring is needed within multiple paging cycles after a paging message is received.

This embodiment further provides a UE, configured with the apparatus 800 for paging a UE as described above.

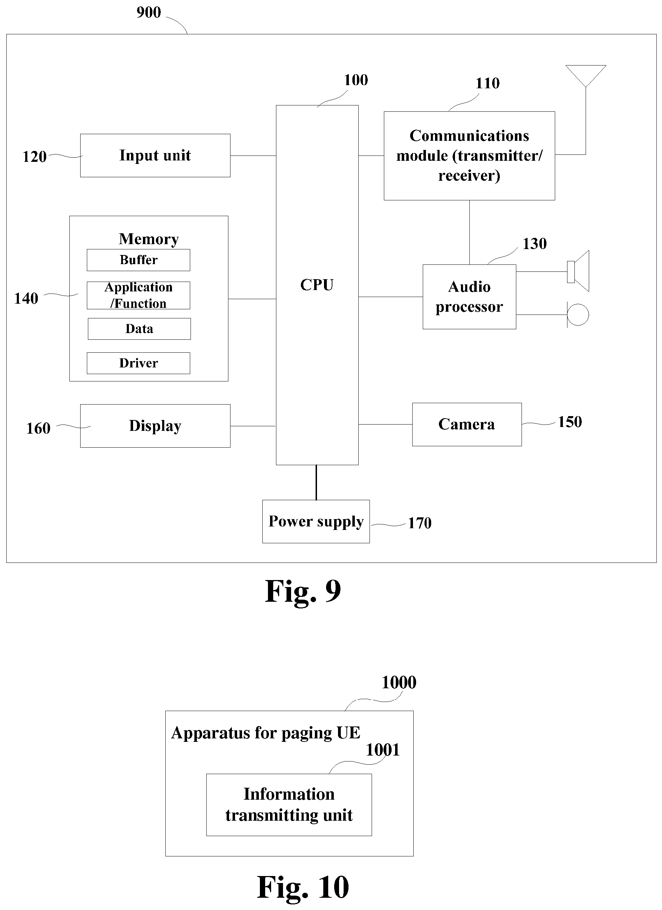

FIG. 9 is a schematic diagram of the UE of the embodiment of this disclosure. As shown in FIG. 9, the UE 900 may include a central processing unit 100 and a memory 140, the memory 140 being coupled to the central processing unit 100. It should be noted that this figure is illustrative only, and other types of structures may also be used, so as to supplement or replace this structure and achieve a telecommunications function or other functions.

In one implementation, the functions of the apparatus 800 for paging a UE may be integrated into the central processing unit 100. The central processing unit 100 may be configured to carry out the method for paging a UE described in Embodiment 1.

For example, the central processing unit 100 may be configured to perform the following control: calculating a first-grade paging group index of the UE based on an inherent identity of the UE, or based on an inherent identity of the UE and a network configuration parameter; calculating a second-grade paging group index of the UE based on a network identity allocated by a mobility management entity for the UE; receiving indication information for indicating paging group indices transmitted by a base station, the paging group indices including a first-grade paging group index and a second-grade paging group index; determining whether the first-grade paging group index contained in the indication information is consistent with the calculated first-grade paging group index, and whether the second-grade paging group index contained in the indication information is consistent with the calculated second-grade paging group index ; and decoding a downlink data channel transmitted by the base station to determine whether the UE is paged, when the first-grade paging group index contained in the indication information is consistent with the calculated first-grade paging group index and the second-grade paging group index contained in the indication information is consistent with the calculated second-grade paging group index.

In another implementation, the apparatus 800 for paging a UE and the central processing unit 100 may be configured separately. For example, the apparatus 800 for paging a UE may be configured as a chip connected to the central processing unit 100, with its functions being realized under control of the central processing unit.

As shown in FIG. 9, the UE 900 may further include a communications module 110, an input unit 120, an audio processor 130, a memory 140, a camera 150, a display 160 and a power supply 170. Functions of the above components are similar to those in the relevant art, and shall not be described herein any further. It should be noted that the UE 900 does not necessarily include all the parts shown in FIG. 9, and furthermore, the UE 900 may include parts not shown in FIG. 9, and the relevant art may be referred to.

It can be seen from the above embodiment that a first-grade paging group is divided based on an inherent identity of the UE, or based on an inherent identity of the UE and a network configuration parameter, and a second-grade paging group is divided based on a network identity allocated by a mobility management entity for the UE. Hence, different paging groups may have identical or approximate numbers of UEs, which may reduce a probability of "false paging" of the overall cell. And furthermore, as the group number parameters of the paging allocation are determined by the parameter *nB* known to the UE, air-interface signaling needed by separately configuring the parameters may be reduced.

### Embodiment 5

The embodiment of this disclosure provides an apparatus for paging a UE, configured in a base station. This embodiment corresponds to Embodiment 2, with contents identical those in Embodiments 1 and 2 being not going to be described herein any further.

FIG. 10 is a schematic diagram of the apparatus for paging a UE of the embodiment of this disclosure. As shown in FIG. 8, the apparatus 1000 for paging a UE includes:
an information transmitting 1001 unit configured to transmit indication information for indicating paging group indices, the paging group indices including a first-grade paging group index and a second-grade paging group index;
the first-grade paging group index is obtained based on inherent identity of the UE, which is not encompassed by the wording of the claims, or based on the inherent identity of the UE and a network configuration parameter, and the second-grade paging group index is obtained based on network identity allocated by a mobility management entity for the UE.

In this embodiment, the inherent identity of the UE is an IMSI, the network identity of the UE is an S-TMSI, and the network configuration parameter is a number *nB* denoting paging occasions of a cell in a paging cycle.

In one implementation, the first-grade paging group index and the second-grade paging group index may be calculated by the base station, and then contained in, for example, DCI of a PDCCH.

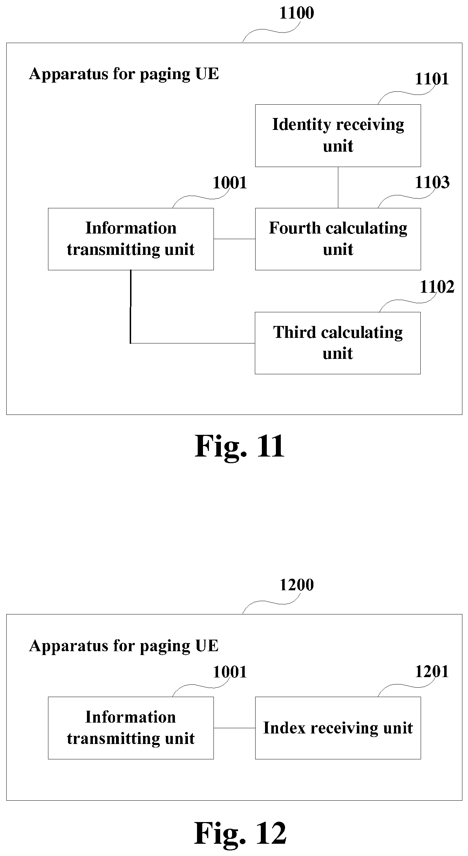

FIG. 11 is another schematic diagram of the apparatus for paging a UE of the embodiment of this disclosure. As shown in FIG. 11, the apparatus 1100 for paging a UE includes an information transmitting 1001, as described above.

As shown in FIG. 11, the apparatus 1100 for paging a UE may further include:
an identity receiving unit 1101 configured to receive the network identity transmitted by the MME;
a third calculating unit 1102 configured to calculate the first-grade paging group index of the UE based on the inherent identity of the UE, or based on the inherent identity of the UE and the network configuration parameter; and
a fourth calculating unit 1103 configured to calculate the second-grade paging group index of the UE based on the network identity.

In another implementation, the first-grade paging group index and the second-grade paging group index may be calculated and then transmitted to the base station by the MME, and the base station contains the first-grade paging group index and the second-grade paging group index in, for example, the DCI of the PDCCH.

FIG. 12 is a further schematic diagram of the apparatus for paging a UE of the embodiment of this disclosure. As shown in FIG. 12, the apparatus 1200 for paging a UE includes an information transmitting 1001, as described above.

As shown in FIG. 12, the apparatus 1200 for paging a UE may further include:
an index receiving unit 1201 configured to receive the first-grade paging group index and the second-grade paging group index transmitted by the MME.

In this embodiment, the information transmitting unit 1001 may further be configured to transmit cycle information, the cycle information indicating that no monitoring is needed within multiple paging cycles after the UE receives a paging message.

The embodiment of this disclosure further provides a base station, configured with the above apparatus 1000 for paging a UE, apparatus 1100 for paging a UE, or apparatus 1200 for paging a UE.

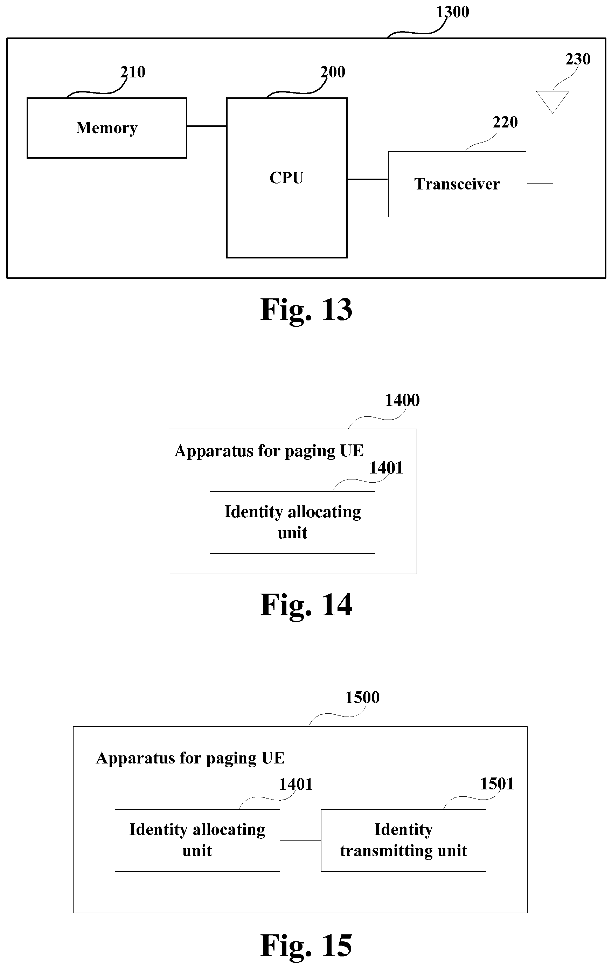

FIG. 13 is a schematic diagram of the base station of the embodiment of this disclosure. As shown in FGI. 13, the base station 1300 may include a central processing unit (CPU) 200 and a memory 210, the memory 210 being coupled to the central processing unit 200. The memory 210 may store various data, and furthermore, it may store a program for information processing, and execute the program under control of the central processing unit 200.

The base station 1300 may carry out the method for paging a UE described in Embodiment 2. And the central processing unit 200 may be configured to carry out the functions of the apparatus 1000 for paging a UE, the apparatus 1100 for paging a UE, or the apparatus 1200 for paging a UE.

For example, the central processing unit 200 may be configured to perform the following control: transmitting indication information for indicating paging group indices, the paging group indices including a first-grade paging group index and a second-grade paging group index; the first-grade paging group index is obtained based on inherent identity of UE, or based on the inherent identity of the UE and a network configuration parameter, and the second-grade paging group index is obtained based on network identity allocated by a mobility management entity for the UE.

Furthermore, as shown in FIG. 13, the base station 1300 may include a transceiver 220, and an antenna 230, etc. Functions of the above components are similar to those in the relevant art, and shall not be described herein any further. It should be noted that the base station 1300 does not necessarily include all the parts shown in FIG. 13, and furthermore, the base station 1300 may include parts not shown in FIG. 13, and the relevant art may be referred to.

It can be seen from the above embodiment that a first-grade paging group is divided based on an inherent identity of the UE, or based on an inherent identity of the UE and a network configuration parameter, and a second-grade paging group is divided based on a network identity allocated by a mobility management entity for the UE. Hence, different paging groups may have identical or approximate numbers of UEs, which may reduce a probability of "false paging" of the overall cell. And furthermore, as the group number parameters of the paging allocation are determined by the parameter *nB* known to the UE, air-interface signaling needed by separately configuring the parameters may be reduced.

### Embodiment 6

The embodiment of this disclosure provides an apparatus for paging a UE, configured in an MME. This embodiment corresponds to Embodiment 3, with contents identical those in Embodiments 1-3 being not going to be described herein any further.

FIG. 14 is a schematic diagram of the apparatus for paging a UE of the embodiment of this disclosure. As shown in FIG. 14, the apparatus 1400 for paging a UE includes:
an identity allocating unit 1401 configured to allocate a network identity for the UE attached to the mobility management entity;
the network identity makes multiple UEs belonging to the same first-grade paging group uniformly distributed in different second-grade paging groups, the first-grade paging group being formed based on inherent identities of the UE, which is not encompassed by the wording of the claims, or based on the inherent identities of the UE and network configuration parameters.

In this embodiment, the inherent identity of the UE is an IMSI, the network identity of the UE is an S-TMSI, and the network configuration parameter is a number *nB* denoting paging occasions of a cell in a paging cycle.

In one implementation, the first-grade paging group index and the second-grade paging group index may be calculated by the base station, and may be contained by the base station in, for example, the DCI of the PDCCH.

FIG. 15 is another schematic diagram of the apparatus for paging a UE of the embodiment of this disclosure. As shown in FIG. 15, the apparatus 1500 for paging a UE includes an identity allocating unit 1401, as described above.

As shown in FIG. 15, the apparatus 1500 for paging a UE may further include:
an identity transmitting unit 1501 configured to transmit the network identity allocated for the UE to a base station.

In another implementation, the first-grade paging group index and the second-grade paging group index may be calculated by the MME and then transmitted to the base station, and the base station may contain the first-grade paging group index and the second-grade paging group index in, for example, the DCI of the PDCCH.

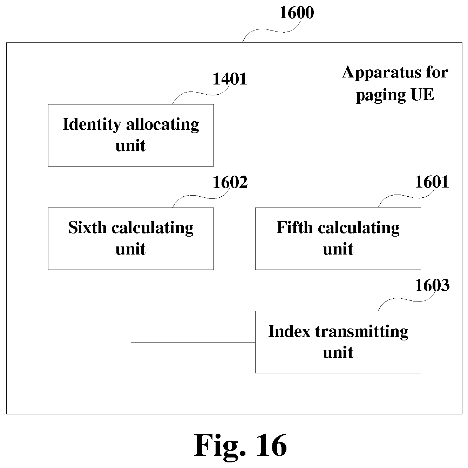

FIG. 15 is a further schematic diagram of the apparatus for paging a UE of the embodiment of this disclosure. As shown in FIG. 16, the apparatus 1600 for paging a UE includes an identity allocating unit 1401, as described above.

As shown in FIG. 16, the apparatus 1600 for paging a UE may further include:
a fifth calculating unit 1601 configured to calculate a first-grade paging group index of the UE based on the inherent identity of the UE, or based on the inherent identity of the UE and the network configuration parameter;
a sixth calculating unit 1602 configured to calculate a second-grade paging group index of the UE based on the network identity; and
an index transmitting unit 1603 configured to transmit the first-grade paging group index and the second-grade paging group index to the base station.

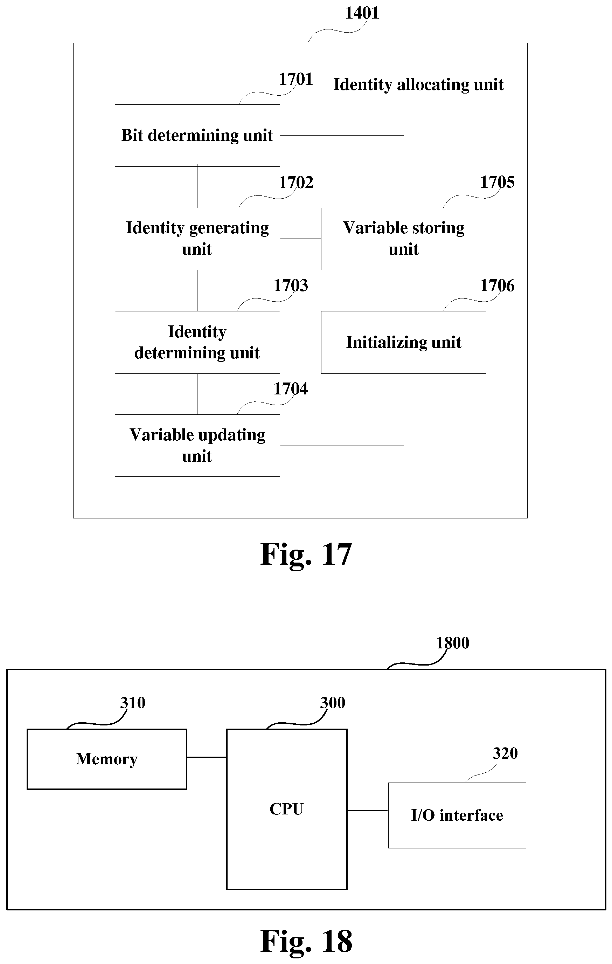

FIG. 17 is a schematic diagram of the identity allocating unit of the embodiment of this disclosure. As shown in FIG. 17, the identity allocating unit 1401 may include:
a bit determining unit 1701 configured to determine L bits in the IMSI of the UE; where, L is a predefined value, a numeral value constituted by the L bits is *temp,* the *temp* corresponding to a variable S-TMSI_Group[*temp*];
an identity generating unit 1702 configured to generate an S-TMSI satisfying the following condition: $S - TMSI mod {2}^{∧ M} = S - TMSI _ Group \left[temp\right] ;$ where, M is a predefined number of bits used in S-TMSI grouping, and mod denotes a modulo operation;
an identity determining unit 1703 configured to allocate the S-TMSI for the UE; and
a variable updating unit 1704 configured to update S-TMSI_Group[*temp*].

As shown in FIG. 17, the identity allocating unit 1401 may further include:
a variable storing unit 1705 configured to store 2^*^{L}* variables S-TMSI_GroupID[i]; where, i=0, 1, 2, 3, ..., 2^*^{L}*-1; and
an initializing unit 1706 configured to initialize S-TMSI_GroupID[i], and reset S-TMSI_Group[*temp*] when a value of S-TMSI_Group[*temp*] after being updated by the variable updating unit 1704 is equal to 2^^{M}, such as resetting to be 0.

In one implementation, the bit determining unit 1701 is configured to: select at least 10 bits in the international mobile subscriber identity when the first-grade paging group is formed based on inherent identities of the multiple UEs and the network configuration parameters;
where, $UE _ ID = IMSI mod 1024 ;$ $Paging _ GroupID = UE _ ID div nB , or , Paging _ GroupID = floor \left(UE_ID/nB\right) ;$

Paging _GroupID is the first-grade paging group index, IMSI is the international mobile subscriber identity, *nB* is the network configuration parameter, mod denotes a modulo operation, div denotes a division operation, and floor denotes a rounded down operation.

In another implementation, the bit determining unit 1701 is configured to: select the lowest 10 bits and bits from a (log₂*P* + 1)-th bit to a (log₂(*G***P*))-th bit in an ascending order in the international mobile subscriber identity when the first-grade paging group is formed based on the inherent identities of the multiple UEs;
where, $Paging _ GroupID = \left(IMSI mod G*P\right) / P ;$
and G and P are predefined values, *P* ≥ 1024, Paging_GroupID is the first-grade paging group index, IMSI is the international mobile subscriber identity, and mod denotes a modulo operation.

The embodiment of this disclosure further provides an MME, configured with the above apparatus 1400 for paging a UE, apparatus 1500 for paging a UE, or apparatus 1600 for paging a UE.

FIG. 18 is a schematic diagram of the MME of the embodiment of this disclosure. As shown in FGI. 18, the MME 1800 may include a central processing unit (CPU) 300 and a memory 310, the memory 310 being coupled to the central processing unit 300. The memory 310 may store various data, and furthermore, it may store a program for information processing, and execute the program under control of the central processing unit 300.

The MME 1800 may carry out the method for paging a UE described in Embodiment 3. And the central processing unit 300 may be configured to carry out the functions of the apparatus 1400 for paging a UE, the apparatus 1500 for paging a UE, or the apparatus 1600 for paging a UE.

For example, the central processing unit 300 may be configured to perform the following control: allocating a network identity for a UE attached to the MME; the network identity makes multiple UEs belonging to the same first-grade paging group uniformly distributed in different second-grade paging groups, the first-grade paging group being formed based on inherent identities of the UE, or based on the inherent identities of the UE and network configuration parameters.

Furthermore, as shown in FIG. 18, the MME 1800 may include an input/output (I/O) interface 320, etc. Functions of the above components are similar to those in the relevant art, and shall not be described herein any further. It should be noted that the MME 1800 does not necessarily include all the parts shown in FIG. 18, and furthermore, the MME 1800 may include parts not shown in FIG. 18, and the relevant art may be referred to.

It can be seen from the above embodiment that the MME may control the lowest M bits of the network identity in allocating network identity, and a first-grade paging group is divided based on an inherent identity of the UE, or based on an inherent identity of the UE and a network configuration parameter, and a second-grade paging group is divided based on a network identity allocated by a mobility management entity for the UE. Hence, different paging groups may have identical or approximate numbers of UEs, which may reduce a probability of "false paging" of the overall cell. And furthermore, as the group number parameters of the paging allocation are determined by the parameter *nB* known to the UE, air-interface signaling needed by separately configuring the parameters may be reduced.

### Embodiment 7, which is not encompassed by the wording of the claims

The embodiment of this disclosure provides a communications system, with contents identical embodiments 1-6 being not going to be described herein any further.

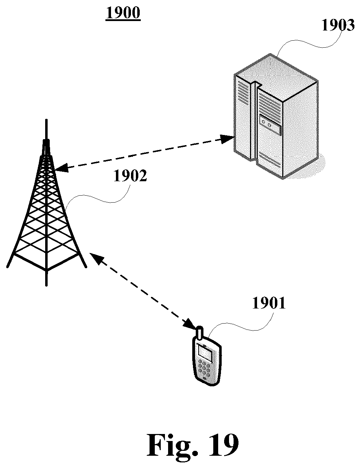

FIG. 19 is a schematic diagram of the communications system of the embodiment of this disclosure. As shown in FIG. 19, the communications system 1900 includes a UE 1901, a base station 1902 and an MME 1903.

The UE 1901 may be as described in Embodiment 4, the base station 1902 may be as described in Embodiment 5, and the MME 1903 may be as described in Embodiment 6.

An embodiment of the present disclosure provides a computer readable program, which, when executed in a UE, will cause a computer unit to carry out the method for paging a UE described in Embodiment 1 in the UE.

An embodiment of the present disclosure provides a computer storage medium, including a computer readable program, which will cause a computer unit to carry out the method for paging a UE described in Embodiment 1 in a UE.

An embodiment of the present disclosure provides a computer readable program, which, when executed in a base station, will cause a computer unit to carry out the method for paging a UE described in Embodiment 2 in the base station.

An embodiment of the present disclosure provides a computer storage medium, including a computer readable program, which will cause a computer unit to carry out the method for paging a UE described in Embodiment 2 in a base station.

An embodiment of the present disclosure provides a computer readable program, which, when executed in an MME, will cause a computer unit to carry out the method for paging a UE described in Embodiment 3 in the MME.

An embodiment of the present disclosure provides a computer storage medium, including a computer readable program, which will cause a computer unit to carry out the method for paging a UE described in Embodiment 3 in an MME.

The above apparatuses of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or blocks or steps as described above. The present disclosure also relates to a storage medium for storing the above program, such as a hard disk, a floppy disk, a CD, a DVD, and a flash memory, etc.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communications combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

## Claims

1. An apparatus (800) for paging a user equipment (900), UE, for use in the UE (900), the apparatus (800) comprising:
a first calculating unit (801) configured to calculate a first-grade paging group index of a first-grade paging group of the UE (900) based on an inherent identity of the UE (900) and a network configuration parameter; and
a second calculating unit (802) configured to calculate a second-grade paging group index of a second-grade paging group of the UE (900) by using a temporary mobile subscriber identity modulo 2^M, wherein M is a predefined number of bits used in the temporary mobile subscriber identity group and the temporary mobile subscriber identity is system architecture evolved-temporary mobile subscriber identity, S-TMSI, wherein:
the first-grade paging group index and the second-grade paging group index are used to determine whether the UE (900) is paged,
the inherent identity of the UE (900) is an international mobile subscriber identity, IMSI, and the network configuration parameter is a number *nB* of paging occasions of a cell in a paging cycle, and
the first calculating unit (801) calculates the first-grade paging group index by using the following formula: Paging _GroupID = floor(UE_ID/*nB*), where, Paging_GroupID is the first-grade paging group index, UE_ID = IMSI mod 2^*^{L}*, mod denotes a modulo operation, *L* is a predefined value, and floor denotes a rounded down operation,
UEs including the UE are uniformly distributed in different second-grade paging groups, and
the UE calculates a paging frame, PF, and a paging occasion, PO, as follows: SFN mod T= (T div N)*(UE_ID mod N), i_s = floor(UE_ID/N) mod Ns, where SFN and i_s respectively determine positions of the PF and the PO, N: min(T, nB), and Ns: max(1, nB/T).

2. The apparatus (800) according to claim 1, wherein the apparatus (800) further comprises:
an information receiving unit (803) configured to receive indication information for indicating paging group indices transmitted by a base station (1300), the paging group indices comprising a first-grade paging group index and a second-grade paging group index;
an information determining unit (804) configured to determine whether the first-grade paging group index contained in the indication information is consistent with the first-grade paging group index calculated by the first calculating unit (801), and whether the second-grade paging group index contained in the indication information is consistent with the second-grade paging group index calculated by the second calculating unit (802); and
an information decoding unit (805) configured to decode a downlink data channel transmitted by the base station (1300) to determine whether the UE (900) is paged, when the first-grade paging group index contained in the indication information is consistent with the first-grade paging group index calculated by the first calculating unit (801) and the second-grade paging group index contained in the indication information is consistent with the second-grade paging group index calculated by the second calculating unit (802).

3. The apparatus (800) according to claim 2, wherein the information receiving unit (803) obtains the indication information by monitoring downlink control information of a physical downlink control channel, or obtains the indication information by receiving system information transmitted by the base station (1300);
and the downlink data channel is a physical downlink shared channel.

4. The apparatus (800) according to claim 2, wherein the information receiving unit (803) is further configured to receive cycle information transmitted by the base station (1300), the cycle information indicating that no monitoring is needed within multiple paging cycles after a paging message is received.

5. An apparatus (1100) for paging a UE (900), for use in a base station (1300), the apparatus (1100) comprising:
an information transmitting unit (1001) configured to transmit a network configuration parameter and a network identity to the UE via system information, SI, as information for indicating a first-grade paging group index of a first-grade paging group and a second-grade paging group index of a second-grade paging group, wherein:
the first-grade paging group index is obtained based on an inherent identity of the UE (900) and the network configuration parameter, and the second-grade paging group index is obtained by using a temporary mobile subscriber identity modulo 2^M, wherein M is a predefined number of bits used in the temporary mobile subscriber identity group and the temporary mobile subscriber identity is system architecture evolved-temporary mobile subscriber identity, S-TMSI,
the first-grade paging group index and the second-grade paging group index are used to determine whether the UE (900) is paged,
the inherent identity of the UE (900) is an international mobile subscriber identity, IMSI, and the network configuration parameter is a number *nB* of paging occasions of a cell in a paging cycle,
the first-grade paging group index is calculated by using the following formula: Paging_GroupID = floor(UE_ID/*nB*), where, Paging _GroupID is the first-grade paging group index, UE_ID = IMSI mod 2^*^{L}*, mod denotes a modulo operation, *L* is a predefined value and floor denotes a rounded down operation,
UEs including the UE are uniformly distributed in different second-grade paging groups, and
the UE calculates a paging frame, PF, and a paging occasion, PO, as follows: SFN mod T= (T div N)*(UE_ID mod N), i_s = floor(UE_ID/N) mod Ns, where SFN and i_s respectively determine positions of the PF and the PO, N: min(T, nB), and Ns: max(1, nB/T).

6. The apparatus (800) according to claim 5, wherein the information transmitting unit is further configured to transmit cycle information, the cycle information indicating that no monitoring is needed within multiple paging cycles after the UE (900) receives a paging message.

7. An apparatus (1400) for paging a UE (900), for use in a mobility management entity (1800), the apparatus (1400) comprising:
an identity allocating unit (1401) configured to allocate a network identity for the UE (900) attached to the mobility management entity via system information, SI;
an identity transmitting unit (1501) configured to transmit the network identity allocated for the UE (900) to a base station (1300), wherein:
the network identity makes multiple UEs belonging to the same first-grade paging group uniformly distributed in different second-grade paging groups, the first-grade paging group being formed based on the inherent identities of the UEs and network configuration parameters,
the first-grade paging group index of a first-grade paging group and the second-grade paging group index of a second-grade paging group are used to determine whether the UE (900) is paged,
the inherent identity of the UE (900) is an international mobile subscriber identity, IMSI, and the network configuration parameter is a number *nB* of paging occasions of a cell in a paging cycle;
a fifth calculating unit (1601) configured to calculate the first-grade paging group index by using the following formula: Paging_GroupID = floor(UE_ID/*nB*), where Paging_GroupID is the first-grade paging group index, UE_ID = IMSI mod 2^*^{L}*, mod denotes a modulo operation, *L* is a predefined value, and floor denotes a rounded down operation; and
a sixth calculating unit (1602) configured to calculate the second-grade paging group index by using a temporary mobile subscriber identity modulo 2^M, wherein M is a predefined number of bits used in the temporary mobile subscriber identity group and the temporary mobile subscriber identity is system architecture evolved-temporary mobile subscriber identity, S-TMSI.

## Patentansprüche

1. Vorrichtung (800) für Funkruf an ein Benutzergerät (900), UE, zur Verwendung in dem UE (900), die Vorrichtung (800) umfassend:
eine erste Recheneinheit (801), die konfiguriert ist, um einen Funkrufgruppenindex erster Ordnung einer Funkrufgruppe erster Ordnung des UE (900) basierend auf einer inhärenten Identität des UE (900) und einem Netzwerkkonfigurationsparameter zu berechnen; und
eine zweite Recheneinheit (802), die konfiguriert ist, um einen Funkrufgruppenindex zweiter Ordnung einer Funkrufgruppe zweiter Ordnung des UE (900) durch Verwenden einer temporären Mobilfunkteilnehmeridentität modulo 2^M zu berechnen, wobei M eine vordefinierte Anzahl von Bits, die in der Gruppe von temporären Mobilfunkteilnehmeridentitäten verwendet werden, ist und die temporäre Mobilfunkteilnehmeridentität eine temporäre Mobilfunkteilnehmeridentität der weiterentwickelten Systemarchitektur, S-TMSI, ist, wobei:
der Funkrufgruppenindex erster Ordnung und der Funkrufgruppenindex zweiter Ordnung verwendet werden, um zu bestimmen, ob das UE (900) per Funkruf gerufen wird,
die inhärente Identität des UE (900) eine internationale Mobilfunkteilnehmeridentität, IMSI, ist
und der Netzwerkkonfigurationsparameter eine Anzahl *nB* von Funkrufanlässen einer Zelle in einem Funkrufzyklus ist und
die erste Recheneinheit (801) den Funkrufgruppenindex erster Ordnung durch Verwenden der folgenden Formel berechnet:
Paging_GroupID = floor(UE_ID/*nB*), wobei Paging_GroupID der Funkrufgruppenindex erster Ordnung ist, UE_ID = IMSI mod 2^*^{L}* ist, mod eine Modulo-Operation bezeichnet, *L* ein vordefinierter Wert ist und floor eine Abrundungsoperation bezeichnet,
UEs einschließlich des UE gleichmäßig auf verschiedene Funkrufgruppen zweiter Ordnung verteilt sind und
das UE einen Funkrufrahmen, PF, und einen Funkrufanlass, PO, wie folgt berechnet: SFN mod T = (T div N)*(UE_ID mod N), i_s = floor(UE_ID/N) mod Ns, wobei SFN und i_s jeweils die Position des PF und des PO bestimmen, N: min(T, nB) ist und Ns: max(1, nB/T) ist.

2. Vorrichtung (800) nach Anspruch 1, wobei die Vorrichtung (800) ferner umfasst:
eine Informationsempfangseinheit (803), die konfiguriert ist, um von einer Basisstation (1300) übertragene Anzeigeinformationen zum Anzeigen von Funkrufgruppenindizes zu empfangen, die Funkrufgruppenindizes umfassend einen Funkrufgruppenindex erster Ordnung und einen Funkrufgruppenindex zweiter Ordnung;
eine Informationsbestimmungseinheit (804), die konfiguriert ist, um zu bestimmen, ob der Funkrufgruppenindex erster Ordnung, der in den Anzeigeinformationen enthalten ist, mit dem Funkrufgruppenindex erster Ordnung, der von der ersten Recheneinheit (801) berechnet wird, übereinstimmt und ob der Funkrufgruppenindex zweiter Ordnung, der in den Anzeigeinformationen enthalten ist, mit dem Funkrufgruppenindex zweiter Ordnung, der von der zweiten Recheneinheit (802) berechnet wird, übereinstimmt; und
eine Informationsdecodierungseinheit (805), die konfiguriert ist, um einen von der Basisstation (1300) übertragenen Downlinkdatenkanal zu decodieren, um zu bestimmen, ob das UE (900) per Funkruf gerufen wird, wenn der Funkrufgruppenindex erster Ordnung, der in den Anzeigeinformationen enthalten ist, mit dem Funkrufgruppenindex erster Ordnung, der von der ersten Recheneinheit (801) berechnet wird, übereinstimmt und der Funkrufgruppenindex zweiter Ordnung, der in den Anzeigeinformationen enthalten ist, mit dem Funkrufgruppenindex zweiter Ordnung, der von der zweiten Recheneinheit (802) berechnet wird, übereinstimmt.

3. Vorrichtung (800) nach Anspruch 2, wobei die Informationsempfangseinheit (803) die Anzeigeinformationen durch Überwachen von Downlinksteuerinformationen eines physischen Downlinksteuerkanals erhält oder die Anzeigeinformationen durch Empfangen von Systeminformationen, die von der Basisstation (1300) übertragen werden, erhält;
und der Downlinkdatenkanal ein physischer gemeinsam genutzter Downlinkkanal ist.

4. Vorrichtung (800) nach Anspruch 2, wobei die Informationsempfangseinheit (803) ferner konfiguriert ist, um von der Basisstation (1300) übertragene Zyklusinformationen zu empfangen, wobei die Zyklusinformationen anzeigen, dass innerhalb mehrerer Funkrufzyklen, nachdem eine Funkrufnachricht empfangen wird, keine Überwachung erforderlich ist.

5. Vorrichtung (1100) für Funkruf an ein UE (900) zur Verwendung in einer Basisstation (1300), die Vorrichtung (1100) umfassend:
eine Informationsübertragungseinheit (1001), die konfiguriert ist, um einen Netzwerkkonfigurationsparameter und eine Netzwerkidentität über Systeminformationen, SI, an das UE zu übertragen, als Informationen zum Anzeigen eines Funkrufgruppenindex erster Ordnung einer Funkrufgruppe erster Ordnung und eines Funkrufgruppenindex zweiter Ordnung einer Funkrufgruppe zweiter Ordnung, wobei:
der Funkrufgruppenindex erster Ordnung basierend auf einer inhärenten Identität des UE (900) und dem Netzwerkkonfigurationsparameter erhalten wird und der Funkrufgruppenindex zweiter Ordnung durch Verwenden einer temporären Mobilfunkteilnehmeridentität modulo 2^M erhalten wird, wobei M eine vordefinierte Anzahl von Bits, die in der Gruppe von temporären Mobilfunkteilnehmeridentitäten verwendet werden, ist und die temporäre Mobilfunkteilnehmeridentität eine temporäre Mobilfunkteilnehmeridentität der weiterentwickelten Systemarchitektur, S-TMSI, ist,
der Funkrufgruppenindex erster Ordnung und der Funkrufgruppenindex zweiter Ordnung verwendet werden, um zu bestimmen, ob das UE (900) per Funkruf gerufen wird,
die inhärente Identität des UE (900) eine internationale Mobilfunkteilnehmeridentität, IMSI, ist und der Netzwerkkonfigurationsparameter eine Anzahl *nB* von Funkrufanlässen einer Zelle in einem Funkrufzyklus ist,
der Funkrufgruppenindex erster Ordnung durch Verwenden der folgenden Formel berechnet wird: Paging_GroupID = floor(UE_ID/*nB*), wobei Paging_GroupID der Funkrufgruppenindex erster Ordnung ist, UE_ID = IMSI mod 2^*^{L}* ist, mod eine Modulo-Operation bezeichnet, *L* ein vordefinierter Wert ist und floor eine Abrundungsoperation bezeichnet,
UEs einschließlich des UE gleichmäßig auf verschiedene Funkrufgruppen zweiter Ordnung verteilt sind und
das UE einen Funkrufrahmen, PF, und einen Funkrufanlass, PO, wie folgt berechnet: SFN mod T = (T div N)*(UE_ID mod N), i_s = floor(UE_ID/N) mod Ns, wobei SFN und i_s jeweils die Position des PF und des PO bestimmen, N: min(T, *nB*) ist und Ns: max(1, *nB*/T) ist.

6. Vorrichtung (800) nach Anspruch 5, wobei die Informationsübertragungseinheit ferner konfiguriert ist, um Zyklusinformationen zu übertragen, wobei die Zyklusinformationen anzeigen, dass innerhalb mehrerer Funkrufzyklen, nachdem das UE (900) eine Funkrufnachricht empfängt, keine Überwachung erforderlich ist.

7. Vorrichtung (1400) für Funkruf an ein UE (900) zur Verwendung in einer Mobilitätsmanagementeinrichtung (1800), die Vorrichtung (1400) umfassend:
eine Identitätszuweisungseinheit (1401), die konfiguriert ist, um eine Netzwerkidentität für das UE (900), das an die Mobilitätsmanagementeinrichtung angebunden ist, über Systeminformationen, SI, zuzuweisen;
eine Identitätsübertragungseinheit (1501), die konfiguriert ist, um die Netzwerkidentität, die für das UE (900) zugewiesen ist, an eine Basisstation (1300) zu übertragen, wobei:
die Netzwerkidentität bewirkt, dass mehrere UEs, die zu derselben Funkrufgruppe erster Ordnung gehören, gleichmäßig auf verschiedene Funkrufgruppen zweiter Ordnung verteilt sind, wobei die Funkrufgruppe erster Ordnung basierend auf den inhärenten Identitäten der UEs und Netzwerkkonfigurationsparametern gebildet wird,
der Funkrufgruppenindex erster Ordnung einer Funkrufgruppe erster Ordnung und der Funkrufgruppenindex zweiter Ordnung einer Funkrufgruppe zweiter Ordnung verwendet werden, um zu bestimmen, ob das UE (900) per Funkruf gerufen wird,
die inhärente Identität des UE (900) eine internationale Mobilfunkteilnehmeridentität, IMSI, ist
und der Netzwerkkonfigurationsparameter eine Anzahl *nB* von Funkrufanlässen einer Zelle in einem Funkrufzyklus ist;
eine fünfte Recheneinheit (1601), die konfiguriert ist, um den Funkrufgruppenindex erster Ordnung durch Verwenden der folgenden Formel zu berechnen: Paging_GroupID = floor(UE_ID/*nB*), wobei Paging_GroupID der Funkrufgruppenindex erster Ordnung ist, UE_ID = IMSI mod 2^*L* ist, mod eine Modulo-Operation bezeichnet, *L* ein vordefinierter Wert ist und floor eine Abrundungsoperation bezeichnet; und
eine sechste Recheneinheit (1602), die konfiguriert ist, um den Funkrufgruppenindex zweiter Ordnung durch Verwenden einer temporären Mobilfunkteilnehmeridentität modulo 2^M zu berechnen, wobei M eine vordefinierte Anzahl von Bits, die in der Gruppe von temporären Mobilfunkteilnehmeridentitäten verwendet werden, ist und die temporäre Mobilfunkteilnehmeridentität eine temporäre Mobilfunkteilnehmeridentität der weiterentwickelten Systemarchitektur, S-TMSI, ist.

## Revendications

1. Appareil (800) pour rechercher un équipement utilisateur (900), UE, destiné à être utilisé dans l'UE (900), l'appareil (800) comprenant :
une première unité de calcul (801) configurée pour calculer un index de groupe de recherche de premier niveau d'un groupe de recherche de premier niveau de l'UE (900) sur la base d'une identité inhérente de l'UE (900) et d'un paramètre de configuration réseau ; et
une seconde unité de calcul (802) configurée pour calculer un index de groupe de recherche de second niveau d'un groupe de recherche de second niveau de l'UE (900) en utilisant une identité temporaire d'abonné mobile modulo 2^M, dans lequel M est un nombre prédéfini de bits utilisés dans le groupe d'identité temporaire d'abonné mobile et l'identité temporaire d'abonné mobile est une identité temporaire d'abonné mobile évoluée pour l'architecture système, S-TMSI, dans lequel :
l'index de groupe de recherche de premier niveau et l'index de groupe de recherche de second niveau sont utilisés pour déterminer si l'UE (900) est recherché,
l'identité inhérente de l'UE (900) est une identité internationale d'abonné mobile, IMSI, et le paramètre de configuration réseau est un nombre *nB* d'occasions de recherche d'une cellule dans un cycle de recherche, et
la première unité de calcul (801) calcule l'index de groupe de recherche de premier niveau en utilisant la formule suivante :
Paging_GroupID = floor(UE_ID/*nB*), où, Paging_GroupID est l'index de groupe de recherche de premier niveau, UE_ID = IMSI mod 2^*^{L}*, mod désigne une opération modulo, *L* est une valeur prédéfinie, et floor désigne une opération d'arrondi à l'entier inférieur,
les UE, y compris l'UE, sont répartis uniformément dans différents groupes de recherche de second niveau, et
l'UE calcule une trame de recherche, PF, et une occasion de recherche, PO, comme suit : SFN mod T = (T div N) * (UE_ID mod N), i_s = floor(UE_ID/N) mod Ns, où SFN et i_s déterminent respectivement des positions de la PF et de la PO, N : min(T, nB) et Ns : max(1, nB/T).

2. Appareil (800) selon la revendication 1, dans lequel l'appareil (800) comprend en outre :
une unité de réception d'informations (803) configurée pour recevoir des informations d'indication pour indiquer des index de groupe de recherche transmis par une station de base (1300), les index de groupe de recherche comprenant un index de groupe de recherche de premier niveau et un index de groupe de recherche de second niveau ;
une unité de détermination d'informations (804) configurée pour déterminer si l'index de groupe de recherche de premier niveau contenu dans les informations d'indication est cohérent avec l'index de groupe de recherche de premier niveau calculé par la première unité de calcul (801), et si l'index de groupe de recherche de second niveau contenu dans les informations d'indication est cohérent avec l'index de groupe de recherche de second niveau calculé par la seconde unité de calcul (802) ; et
une unité de décodage d'informations (805) configurée pour décoder un canal de données descendant transmis par la station de base (1300) pour déterminer si l'UE (900) est recherché, lorsque l'index de groupe de recherche de premier niveau contenu dans les informations d'indication est cohérent avec l'index de groupe de recherche de premier niveau calculé par la première unité de calcul (801) et l'index de groupe de recherche de second niveau contenu dans les informations d'indication est cohérent avec l'index de groupe de recherche de second niveau calculé par la seconde unité de calcul (802).

3. Appareil (800) selon la revendication 2, dans lequel l'unité de réception d'informations (803) obtient les informations d'indication en surveillant des informations de commande de liaison descendante d'un canal de commande de liaison descendante physique, ou obtient les informations d'indication en recevant des informations système transmises par la station de base (1300) ;
et le canal de données descendant est un canal physique partagé de liaison descendante.

4. Appareil (800) selon la revendication 2, dans lequel l'unité de réception d'informations (803) est en outre configurée pour recevoir des informations de cycle transmises par la station de base (1300), les informations de cycle indiquant qu'aucune surveillance n'est nécessaire au sein de plusieurs cycles de recherche après la réception d'un message de recherche.

5. Appareil (1100) pour rechercher un UE (900), destiné à être utilisé dans une station de base (1300), l'appareil (1100) comprenant :
une unité de transmission d'informations (1001) configurée pour transmettre un paramètre de configuration réseau et une identité de réseau à l'UE par l'intermédiaire d'informations système, SI, comme informations permettant d'indiquer un index de groupe de recherche de premier niveau d'un groupe de recherche de premier niveau et un index de groupe de recherche de second niveau d'un groupe de recherche de second niveau, dans lequel :
l'index de groupe de recherche de premier niveau est obtenu sur la base d'une identité inhérente de l'UE (900) et du paramètre de configuration réseau, et l'index de groupe de recherche de second niveau est obtenu en utilisant une identité temporaire d'abonné mobile modulo 2^M, dans lequel M est un nombre prédéfini de bits utilisés dans le groupe d'identité temporaire d'abonné mobile et l'identité temporaire d'abonné mobile est l'identité temporaire d'abonné mobile évoluée pour l'architecture système, S-TMSI,
l'index de groupe de recherche de premier niveau et l'index de groupe de recherche de second niveau sont utilisés pour déterminer si l'UE (900) est recherché,
l'identité inhérente de l'UE (900) est une identité internationale d'abonné mobile, IMSI, et le paramètre de configuration réseau est un nombre *nB* d'occasions de recherche d'une cellule dans un cycle de recherche,
l'index de groupe de recherche de premier niveau est calculé en utilisant la formule suivante : Paging_GroupID = floor(UE_ID/*nB*), où, Paging_GroupID est l'index de groupe de recherche de premier niveau, UE_ID = IMSI mod 2^*^{L}*, mod désigne une opération modulo, *L* est une valeur prédéfinie et floor désigne une opération d'arrondi à l'entier inférieur,
les UE, y compris l'UE, sont répartis uniformément dans différents groupes de recherche de second niveau, et
l'UE calcule une trame de recherche, PF, et une occasion de recherche, PO, comme suit : SFN mod T = (T div N) * (UE_ID mod N), i_s = floor(UE_ID/N) mod Ns, où SFN et i_s déterminent respectivement des positions de la PF et de la PO, N : min(T, *nB*) et Ns : max(1, *nB*/T).

6. Appareil (800) selon la revendication 5, dans lequel l'unité de transmission d'informations est en outre configurée pour transmettre des informations de cycle, les informations de cycle indiquant qu'aucune surveillance n'est nécessaire au sein de plusieurs cycles de recherche après que l'UE (900) a reçu un message de recherche.

7. Appareil (1400) pour rechercher un UE (900), destiné à être utilisé dans une entité de gestion de mobilité (1800), l'appareil (1400) comprenant :
une unité d'attribution d'identité (1401) configurée pour attribuer une identité de réseau à l'UE (900) lié à l'entité de gestion de mobilité par l'intermédiaire d'informations système, SI ;
une unité de transmission d'identité (1501) configurée pour transmettre l'identité de réseau attribuée à l'UE (900) à une station de base (1300), dans lequel :
l'identité de réseau permet de répartir uniformément plusieurs UE appartenant au même groupe de recherche de premier niveau dans différents groupes de recherche de second niveau, le groupe de recherche de premier niveau étant formé sur la base des identités inhérentes des UE et des paramètres de configuration réseau,
l'index de groupe de recherche de premier niveau d'un groupe de recherche de premier niveau et l'index de groupe de recherche de second niveau d'un groupe de recherche de second niveau sont utilisés pour déterminer si l'UE (900) est recherché,
l'identité inhérente de l'UE (900) est une identité internationale d'abonné mobile, IMSI, et le paramètre de configuration réseau est un nombre *nB* d'occasions de recherche d'une cellule dans un cycle de recherche ;
une cinquième unité de calcul (1601) configurée pour calculer l'index de groupe de recherche de premier niveau en utilisant la formule suivante : Paging_GroupID = floor(UE_ID/*nB*), où, Paging_GroupID est l'index de groupe de recherche de premier niveau, UE_ID = IMSI mod 2^*L*, mod désigne une opération modulo, *L* est une valeur prédéfinie, et floor désigne une opération d'arrondi à l'entier inférieur ; et
une sixième unité de calcul (1602) configurée pour calculer l'index de groupe de recherche de second niveau en utilisant une identité temporaire d'abonné mobile modulo 2^M, dans lequel M est un nombre prédéfini de bits utilisés dans le groupe d'identité temporaire d'abonné mobile et l'identité temporaire d'abonné mobile est une identité temporaire d'abonné mobile évoluée pour l'architecture système, S-TMSI.
